# EUROPEAN PATENT APPLICATION

(11) **EP 2 568 678 A1**
(43) Date of publication of application: **13.03.2013**
(21) Application number: 10850958.9
(22) Date of filing: 06.05.2010
(51) Int. Cl.: H04L 27/00

(54) **METHOD, DEVICE AND COMMUNICATION SYSTEM FOR MODULATION TRANSMISSION**

(71) Applicant: Huawei Technologies Co., Ltd., Shenzhen, Guangdong 518129 (CN)
(72) Inventor: DONG, Pengpeng, Shenzhen, Guangdong 518129 (CN); XIAO, Jiehua, Shenzhen, Guangdong 518129 (CN)
(74) Representative: Goddar, Heinz J.
(86) International application number: PCT/CN2010/072491
(87) International publication number: WO 2011/137589

(57) **Abstract**

A modulation and transmission method includes: forming valid information bits and training sequence information into one to-be-transmitted information group; modulating the to-be-transmitted information group by using a first modulation mode, where the first modulation mode makes the quantity of valid information symbols occupied by the valid information bits in one transmission unit be a first quantity; placing a third quantity of padding symbols altogether in symbol positions corresponding to two ends of a transmit frequency band, and placing the valid information symbols in the remaining symbol positions of the transmit frequency band, where the sum of the third quantity and the first quantity is smaller than or equal to a second quantity, the second quantity is the quantity of valid information symbols that are occupied by the valid information bits in one transmission unit when a second modulation mode is used, and the second quantity is larger than the first quantity; performing an inverse discrete Fourier transform operation, a cyclic prefix addition operation, and a transmit pulse shaping operation on a transmission unit where a padding symbol is placed; and transmitting a transmission unit that has undergone transmit pulse shaping, where a valid information bit transmission rate at the time when the transmission unit that has undergone transmit pulse shaping is transmitted is the same as a valid information bit transmission rate at the time when a transmission unit including a second quantity of valid information symbols is transmitted. Another modulation and transmission method and a modulation and transmission apparatus, a communication system, and a processor corresponding to the modulating and transmitting method can reduce power attenuation and reduce performance loss at a receiving end.

## Description

### FIELD OF THE INVENTION

The present invention relates to the field of communication technologies, and in particular to a modulation and transmission method and apparatus, and a communication system.

### BACKGROUND OF THE INVENTION

As users' requirement on communication systems becomes higher and higher, communications technologies are developing faster and faster. For example, a packet radio service of the global system for mobile communications/GSM EDGE radio access network (GSM/GERAN: Global System for Mobile Communications/GSM EDGE Radio Access Network) is experiencing an evolution process from the general packet radio service technology (GPRS: General Packet Radio Service), to enhanced general packet radio service (EGPRS: Enhanced GPRS), and then to enhanced general packet radio service phase 2 (EGPRS2 Enhanced GPRS phase 2). The enhancement of performance of the packet data service mainly lies in the enhancement of data throughput. Gaussian filtered minimum shift keying (GMSK: Gaussian Filtered Minimum Shift Keying) modulation in GSM is still adopted at a physical layer of GPRS, and CS1 to CS4 are adopted for channel coding. EGPRS introduces 8 phase shift keying (8PSK: 8 Phase Shift Keying) modulation on the basis of the original GMSK modulation, and MSC1 to MSC4 (corresponding to GMSK modulation) and MCS5 to MSC9 (corresponding to 8PSK modulation) are adopted for channel coding. The further evolution to EGPRS2 introduces higher order modulation and new coding modes. The technical evolution of EGPRS2 is complicated and includes two stages EGPRS2-A and EGPRS2-B. EGPRS2-A introduces higher order modulation (16QAM and 32QAM) and new coding modes (DAS5 to DAS12 and UAS7 to UAS11). EGPRS2-B introduces, in addition to new modulation (QPSK, 16QAM, and 32QAM) and coding (DBS5 to DBS12 and UBS5 to UBS12), a higher symbol rate (HSR: Higher Symbol Rate).

An existing EGPRS2 improved technology is the precoded EGPRS2 (PCE: Precoded EGPRS2) solution. By introducing inverse discrete Fourier transform (IDFT: Inverse Discrete Fourier Transform) at a transmitting end and introducing discrete Fourier transform (DFT) at a receiving end, original time domain signal processing of EGPRS2 is transformed to frequency domain processing, thereby reducing the complexity of a receiver, and meanwhile obtaining better throughput performance and capability to resist TX/RX Impairments.

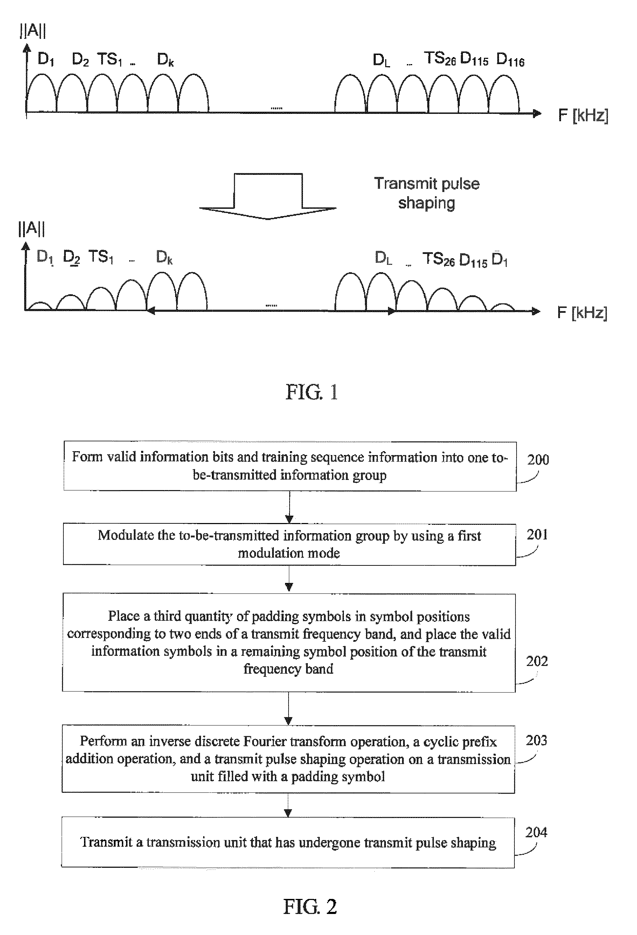

In the prior art, in an existing PCE solution, an original linear GMSK pulse is adopted for shaping, in order to ensure that existing channel coding is unchanged while a spectrum feature of a transmitted signal is not changed. Power attenuation of an information symbol in a transmission unit is shown in FIG. 1. From FIG. 1, it can be seen that, after a transmit pulse shaping operation, power of information symbols at the two ends of the transmission unit (located at the edges of a frequency band) suffer greater attenuation. The closer an information symbol is to an edge of a frequency band, the greater its power attenuation is. Therefore, use of the PCE solution hardly makes contribution to the enhancement of the service performance of a channel with a high coding rate (such as DAS12 and DBS12), and even causes certain performance loss. Meanwhile, in the existing PCE solution, the quantity of time domain symbols of an existing GERAN system is still maintained in one transmission unit of a modulating and transmitting end. For example, under a normal symbol rate (NSR: Normal Symbol Rate), there are 116 valid information (valid information is the information to be transmitted after user data undergoes channel coding) symbols and 26 training sequence (Training Sequence) symbols. This results in a small interval (only 1.9 kHz) between during transmission of subcarriers, and makes the PCE solution have a poor robustness in the performance of processing a frequency error.

### SUMMARY OF THE INVENTION

Embodiments of the present invention provide a modulation and transmission method and apparatus, and a communication system, which can reduce power attenuation and reduce performance loss at a receiving end.

An embodiment of the present invention provides a modulation and transmission method, including:
forming valid information bits and training sequence information into one to-be-transmitted information group;
modulating the to-be-transmitted information group by using a first modulation mode, where the first modulation mode makes the quantity of valid information symbols occupied by the valid information bits in one transmission unit be a first quantity;
placing a third quantity of padding symbols altogether in symbol positions corresponding to two ends of a transmit frequency band, and placing the valid information symbols in the remaining symbol positions of the transmit frequency band, where the sum of the third quantity and the first quantity is smaller than or equal to a second quantity, the second quantity is the quantity of valid information symbols that are occupied by the valid information bits in one transmission unit when a second modulation mode is used, and the second quantity is larger than the first quantity;
performing an inverse discrete Fourier transform operation, a cyclic prefix addition operation, and a transmit pulse shaping operation on a transmission unit where a padding symbol is placed; and
transmitting a transmission unit that has undergone transmit pulse shaping, where a valid information bit transmission rate at the time when the transmission unit that has undergone transmit pulse shaping is transmitted is the same as a valid information bit transmission rate at the time when a transmission unit including a second quantity of valid information symbols is transmitted.

An embodiment of the present invention provides another modulation and transmission method, including:
forming valid information bits and training sequence information into one to-be-transmitted information group;
modulating the to-be-transmitted information group by using a first modulation mode, where the first modulation mode makes the quantity of valid information symbols occupied by the valid information bits in one transmission unit be a first quantity;
performing an inverse discrete Fourier transform operation, a cyclic prefix addition operation, and a transmit pulse shaping operation on a modulated transmission unit; and
transmitting a transmission unit that has undergone transmit pulse shaping, where a valid information bit transmission rate at the time when the transmission unit that has undergone transmit pulse shaping is transmitted is the same as a valid information bit transmission rate at the time when a transmission unit including a second quantity of valid information symbols is transmitted, the second quantity is the quantity of valid information symbols that are occupied by the valid information bits in one transmission unit when a second modulation mode is used, and the second quantity is larger than the first quantity.

An embodiment of the present invention provides a modulation and transmission apparatus, including:
a forming unit, configured to form valid information bits and training sequence information into one to-be-transmitted information group;
a modulating unit, configured to modulate, by using a first modulation mode, the to-be-transmitted information group formed by the forming unit, where the first modulation mode makes the quantity of valid information symbols occupied by the valid information bits in one transmission unit be a first quantity;
a placing unit, configured to place a third quantity of padding symbols altogether in symbol positions corresponding to two ends of a transmit frequency band, and place the valid information symbols in the remaining symbol positions of the transmit frequency band, where the sum of the third quantity and the first quantity is smaller than or equal to a second quantity, the second quantity is the quantity of valid information symbols that are occupied by the valid information bits in one transmission unit when a second modulation mode is used, and the second quantity is larger than the first quantity;
an operating unit, configured to perform an inverse discrete Fourier transform operation, a cyclic prefix addition operation, and a transmit pulse shaping operation on a transmission unit where the placing unit has placed a padding symbol; and
a transmitting unit, configured to transmit a transmission unit on which the operating unit has performed transmit pulse shaping, where a valid information bit transmission rate at the time when the transmission unit that has undergone the transmit pulse shaping is transmitted is the same as a valid information bit transmission rate at the time when a transmission unit including a second quantity of valid information symbols is transmitted.

An embodiment of the present invention provides another modulation and transmission apparatus, including:
a forming unit, configured to form valid information bits and training sequence information into one to-be-transmitted information group;
a modulating unit, configured to modulate, by using a first modulation mode, the to-be-transmitted information group formed by the forming unit, where the first modulation mode makes the quantity of valid information symbols occupied by the valid information bits in one transmission unit be a first quantity;
an operating unit, configured to perform an inverse discrete Fourier transform operation, a cyclic prefix addition operation, and a transmit pulse shaping operation on a transmission unit obtained by the modulating unit; and
a transmitting unit, configured to transmit a transmission unit obtained by the operating unit, where a valid information bit transmission rate at the time when the transmission unit that has undergone transmit pulse shaping is transmitted is the same as a valid information bit transmission rate at the time when a transmission unit including a second quantity of valid information symbols is transmitted, the second quantity is the quantity of valid information symbols that are occupied by the valid information bits in one transmission unit when a second modulation mode is used, and the second quantity is larger than the first quantity.

An embodiment of the present invention provides a communication system, including a modulation and transmission apparatus provided in the embodiment of the present invention.

An embodiment of the present invention provides a processor, including a modulation and transmission apparatus provided in the embodiment of the present invention.

From the foregoing technical solutions provided in the embodiments of the present invention, after the first modulation mode is used, padding symbols may be placed in the symbol positions corresponding to the two ends of the transmit frequency band, thereby adding guard bands at the edges of the pulse-shaped transmit frequency band. Thereby, in a transmission process, the power of a valid information symbol may avoid suffering great attenuation, thereby reducing performance loss at a receiving end and obtaining performance gain on a high coding rate channel.

### BRIEF DESCRIPTION OF THE DRAWING

To illustrate technical solutions in embodiments of the present invention or in the prior art more clearly, accompanying drawings to used in the description of the embodiments or the prior art are briefly described in the following. Evidently, the accompanying drawings are only some exemplary embodiments of the present invention, and persons of ordinary skill in the art may obtain other drawings according to these accompanying drawings without making creative efforts.
FIG. 1 is a schematic diagram of attenuation of signal power of symbols in a transmission unit in the prior art;
FIG. 2 is a flowchart of a modulation and transmission method according to an embodiment of the present invention;
FIG. 3 is a schematic diagram of attenuation of signal power of symbols according to another embodiment of the present invention;
FIG. 4 is a flowchart of a modulation and transmission method according to another embodiment of the present invention;
FIG. 5 is a schematic diagram of bandwidth occupation of information symbols in a transmission unit according to another embodiment of the present invention;
FIG. 6 is a structure diagram of a modulation and transmission apparatus according to an embodiment of the present invention; and
FIG. 7 is a structure diagram of a modulation and transmission apparatus according to another embodiment of the present invention.

### DETAILED DESCRIPTION OF THE EMBODIMENTS

Technical solutions in embodiments of the present invention are hereinafter described clearly and completely with reference to accompanying drawings in the embodiments of the present invention. Apparently, the described embodiments are only part rather than all of the embodiments of the present invention. All other embodiments, which can be obtained by persons of ordinary skill in the art based on the embodiments of the present invention without creative efforts, fall within the protection scope of the present invention.

A modulation and transmission method provided in an embodiment of the present invention is first introduced. FIG. 2 describes a procedure of a modulation and transmission method provided in an embodiment of the present invention, including the following steps:
200. Form valid information bits and training sequence information into one to-be-transmitted information group.

The training sequence information may be evenly distributed among valid information.

201. Without changing the quantity of the valid information bits, modulate the to-be-transmitted information group by using a first modulation mode, where the first modulation mode makes the quantity of valid information symbols used by the valid information bits in one transmission unit (burst) a first quantity.

A Burst is a minimum information unit for PCE transmission, and time it occupies is a definite value T. Each burst includes a certain quantity of symbols (symbol). Each symbol in the foregoing valid information group corresponds to a subcarrier.

Table 1 describes a structure of a transmission unit in an embodiment of the present invention, including a cyclic prefix (CP), valid information symbols (D₁, ..., D₈₇), TS symbols (TS₁, ... , TS₂₆), and a guard period (GP: Guard Period). The embodiment of the present invention does not relate to modifications to the GP part. Unless otherwise specified, the length of the GP is kept to be a fixed value.

**Table 1**

| | | |
|---|---|---|
| CP | 0.. 0 D₁..D_{K} TS₁ D_{K+1}..D_{L} TS₂ D_{L+1}......D_{M} TS₂₆ D_{M+1}..D₈₇ 0..0 | GP |

202. Place a third quantity of padding symbols altogether in symbol positions corresponding to two ends of a transmit frequency band and place the valid information symbols in the remaining symbol positions of the transmitting frequency band, where the sum of the third quantity and the first quantity is smaller than or equal to a second quantity, the second quantity is the quantity of valid information symbols that are occupied by the valid information bits in one transmission unit when a second modulation mode is used, and the second quantity is larger than the first quantity.

In a comparison between the first modulation mode and the second modulation mode, the first modulation mode, relative to the second modulation mode, may be called a high order modulation mode, and the second modulation mode, relative to the first modulation mode, may be called a low order modulation mode. Compared with use of the low order modulation mode, use of the high order modulation mode makes the quantity of symbols, which same valid information bits need to occupy in one burst, different. The higher order of a modulation mode is, the smaller quantity of symbols which valid information needs to occupy in one burst is.

In an embodiment of the present invention, if more than two padding symbols are placed at any end of the transmitting frequency band, the more than two padding symbols are placed continuously.

In an embodiment of the present invention, a relation between the quantity of valid information symbols occupied by same valid information bits in one burst under the high order modulation mode and the quantity of valid information symbols under the low order modulation mode is shown in Table 2.

**Table 2**

| | | | | | |
|---|---|---|---|---|---|
| DAS5-7 | 8PSK | 16QAM | 116 | 87 | 29 |
| DAS8-9 | 16QAM | 32QAM | 116 | 93 | 23 |
| DAS10 -12 | 32QAM | 64QAM | 116 | 97 | 19 |
| DBS5-6 | QPSK | 8PSK | 138 | 92 | 46 |
| DBS7-9 | 16QAM | 32QAM | 138 | 111 | 27 |
| DBS10 -12 | 32QAM | 64QAM | 138 | 115 | 23 |

From Table 1, it can be seen that, after to-be-transmitted information is modulated by using the high order modulation mode, the quantity of symbols occupied by valid information in one burst is smaller than the quantity of symbols occupied by the valid information in the one burst under the low order modulation mode. Therefore, spared symbols can be used as padding symbols, and the padding symbols are placed in the symbol positions corresponding to the two ends of the transmitting frequency band. Thereby, guard bands can be added at the edges of the transmit frequency band after pulse shaping. As for a form of a padding symbol, in an embodiment of the present invention, the padding symbol is the symbol zero; in another embodiment of the present invention, the padding symbol is a random symbol; in still another embodiment of the present invention, the padding symbol is a repetition of a valid information symbol. As for the quantity of padding symbols, that is, the third quantity, it needs to satisfy that the sum of the third quantity and the first quantity is smaller than or equal to the second quantity. In an embodiment of the present invention, same quantities of padding symbols are placed in the symbol positions corresponding to the two ends of the transmitting frequency band; in another embodiment of the present invention, different quantities of padding symbols are placed in the symbol positions corresponding to the two ends of the transmitting frequency band, where the quantity of padding symbols placed in a symbol position corresponding to one end of the transmit frequency band may be 0.

The high order modulation mode shown in Table 1 is only an example and this high order modulation mode does not serve as a limitation. For example, as for DAS5 to 7 channels, the high order modulation mode may also be 32QAM, 64QAM or the like. From Table 1, it also can be seen that, as for HSR EGPRS2 channel types DBS5 to 12, after the high order modulation mode is used, the quantity of valid information symbols in one burst can be limited to within 116, which satisfies a requirement of normal symbol rate transfer. An original bandwidth of a high symbol rate signal is 325 kHz, and in order to limit an actual transmit bandwidth to 200 kHz, its performance loss is greater, compared with that in a case of a normal symbol rate 270 kHz. Therefore, by adopting the solution in the embodiment of the present invention, a high symbol rate is no longer required for transmission, and the normal symbol rate can be used directly for transmission, thereby reducing performance loss caused by bandwidth compression.

203. Perform an inverse discrete Fourier transform (IDFT) operation, a cyclic prefix (CP) addition operation, and a transmit pulse shaping (TX Pulse Shaping) operation on a transmission unit where a padding symbol is placed.

In an embodiment of the present invention, because the time occupied by one burst is a definite value T, the quantity of all symbols (including valid information symbols, CP, TS symbols and so on) in the one burst under a same symbol rate is a definite value. For example, in an embodiment of the present invention (see DAS5 to 7 in Table 1), when the second modulation mode is used, one burst includes 116 valid information symbols, and when the first modulation mode is used, only 87 valid information symbols are occupied by same valid information bits in one burst. After a third quantity of padding symbols are placed, the third quantity is 24 symbols in an embodiment of the present invention, in a case of the quantity of TS symbols is unchanged, to ensure that the quantity of all symbols that are included by one burst when the first modulation mode is used is still a definite value, the length of the CP may be increased with an additional length occupying 5 (116-87-24) symbols. In this way, the length of a CP at the time when the first modulation mode is used is greater than the length of a CP at the time when the second modulation mode is used. That is, symbols that are occupied by the CP when the first modulation mode is used are more than symbols that are occupied by the CP when the second modulation mode is used.

A shaped pulse used in the embodiment of the present invention may be an existing linear GMSK pulse, and may also be another shaped pulse.

204. Transmit a transmission unit that has undergone transmit pulse shaping. A valid information bit transmission rate at the time when the transmission unit that has undergone transmit pulse shaping is transmitted is the same as a valid information bit transmission rate at the time when a transmission unit including a second quantity of valid information symbols is transmitted by using the second modulation mode. That is, a valid information bit transmission rate at the time when a high order modulation mode is used is the same as a valid information bit transmission rate at the time when a low order modulation mode is used.

As can be known above, in this embodiment, after the first modulation mode is used, padding symbols may be placed in the symbol positions corresponding to the two ends of the transmitting frequency band, thereby adding the guard bands at the edges of the pulse-shaped transmit frequency band. In addition, in flat fading channel transmission, the use of the high order modulation mode, relative to a low order modulation mode, does not require that a radio environment is significantly improved. Therefore, in a transmission process, in a case that the radio environment is similar, it may be avoided that the power of valid information symbols suffers great attenuation, thereby reducing performance loss at a receiving end and obtaining performance gain on a high coding rate channel (such as DAS12 and DBS12).

Furthermore, in an embodiment of the present invention, a padding symbol is a repetition of a valid information symbol, and therefore the receive reliability of the valid information symbol will be enhanced, thereby further increasing the performance gain.

In an embodiment of the present invention, transmitting the second quantity of valid information symbols occupies a same bandwidth as transmitting the first quantity of valid information symbols and the second quantity of padding symbols. In this case, if the sum of the first quantity (the quantity of valid information symbols in the first modulation mode) and the third quantity (the quantity of placed padding symbols) is smaller than the second quantity (the quantity of valid information symbols in the second modulation mode), a subcarrier corresponding to each symbol in the transmission unit where the padding symbol is placed occupies a larger bandwidth than a subcarrier corresponding to each symbol in the second modulation mode. Therefore, in a scenario with a high frequency deviation (for example, high-speed movement), the robustness is enhanced while a peak to average power ratio (PAPR: Peak to Average Power Ratio) of a transmitted signal drops.

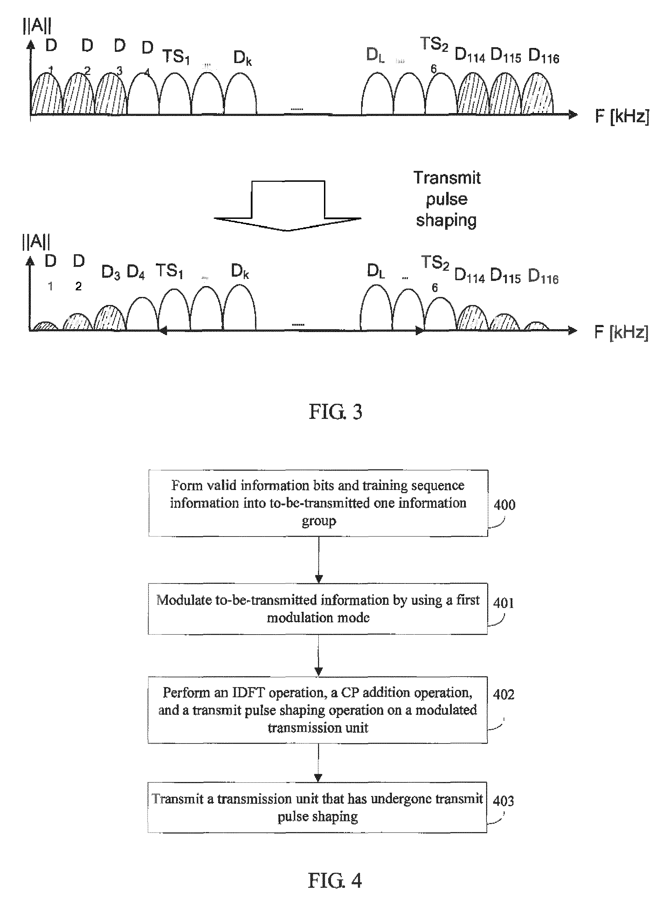

Attenuation of symbols in a transmission unit in a PEC modulation method provided in another embodiment of the present invention is shown in FIG. 3.

Valid information symbols in the transmission unit are D4 to D113. Three padding symbols D1 to D3 are placed at the D4 end, and three padding symbols D114 to D116 are placed at the D113 end. After a transmit pulse shaping operation, it can be seen that attenuation of signal power of the padding symbols is relatively great, while attenuation of signal power of the valid information symbols is relatively sleight. In this way, performance loss of the valid information symbols is reduced, which enables the entire PCE modulation transmission solution to obtain performance gain on a high coding rate channel.

FIG. 4 is a flowchart of a modulation and transmission method according to another embodiment of the present invention, including the following steps:
400. Form valid information bits and training sequence information into one to-be-transmitted information group.
401. Without changing the quantity of the valid information bits, modulate the to-be-transmitted information group by using a first modulation mode, where the first modulation mode makes the quantity of valid information symbols used by the valid information bits in one transmission unit be a first quantity.
402. Perform an IDFT operation, a CP addition operation, and a transmit pulse shaping operation on a modulated transmission unit.

In an embodiment of the present invention, because time occupied by one burst is a definite value T, the quantity of symbols (including valid information symbols, CP, and TS symbols) in the one burst under a same symbol rate is a definite value. For example, in an embodiment of the present invention (see DAS5 to 7 in Table 1), when a second modulation mode is used, one burst includes 116 valid information symbols, and when the first modulation mode is used, one burst needs to include only 87 valid information symbols. In a case that the quantity of TS symbols is unchanged, and to ensure that the quantity of all symbols included by one burst when the first modulation mode is used is still a definite value, the length of the CP may be increased with an additional length occupying 29 (116-87) symbols. In this way, the length of a CP at the time when the first modulation mode is used is greater than the length of a CP at the time when the second modulation mode is used. That is, symbols that are occupied by the CP when the first modulation mode is used are more symbols that are occupied by the CP than when the second modulation mode is used.

A shaped pulse used in the embodiment of the present invention may be an existing linear GMSK pulse, and may also be another shaped pulse.

403. Transmit a transmission unit that has undergone transmit pulse shaping. A valid information bit transmission rate at the time when the transmission unit that has undergone transmit pulse shaping is transmitted is the same as the valid information bit transmission rate at the time when a transmission unit including a second quantity of valid information symbols is transmitted by using the second modulation mode. That is, a valid information bit transmission rate at the time when a high order modulation mode is used is the same as a valid information bit transmission rate at the time when a low order modulation mode is used. The second quantity is the quantity of valid information symbols that are occupied by the valid information bits in one transmission unit when the second modulation mode is used. The second quantity is larger than the first quantity.

As can be known above, because the first modulation mode is used in this embodiment, the quantity of valid information symbols occupied by valid information in the transmission unit is smaller than that in the second modulation mode. That is, the fist quantity is smaller than the second quantity. Meanwhile, the transmission unit with the second quantity of valid information symbols occupies a same bandwidth as the transmission unit with the first quantity of valid information symbols, and therefore, when the quantity of valid information symbols is the first quantity, a subcarrier corresponding to each valid information symbol occupies a larger bandwidth than each valid information symbol of the second quantity. Therefore, in a scenario with a high frequency deviation, the robustness is enhanced and a PAPR of a transmitted signal drops.

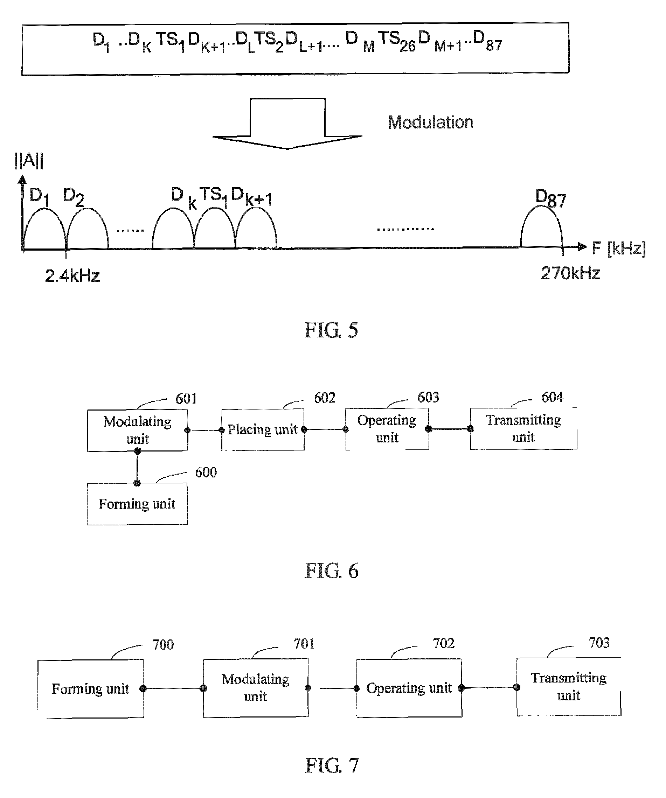

Bandwidth occupation of symbols in a transmission unit in a PCE modulation method provided in another embodiment of the present invention is as shown in FIG. 5 (using the DAS5 to 7 channels in Table 1 as an example).

In FIG. 5, the quantity of valid information symbols occupied by valid information in one transmission unit is 87. In a case that the quantity of TS symbols is kept to be 26, when a signal bandwidth is 270 kHz, a bandwidth occupied by a subcarrier corresponding to each valid information symbol is 2.4 kHz. When the quantity of valid information symbols is 116, a bandwidth occupied by each subcarrier is only 1.9 kHz. Therefore, in the present invention, in a scenario with a high frequency deviation, the robustness is enhanced, while a PAPR of a transmitted signal is reduced.

A first modulation mode used in the present invention may be selected according to an actual application scenario. Therefore, a subcarrier bandwidth during actual transmission changes along with a change of the application scenario, thereby providing a basis for the link adaptation of subcarrier width at a transmitting end. For example, in a case that valid information bits are kept the same and the quantity of TS symbols is 26, a bandwidth occupied by each symbol when a transmission unit provided in an embodiment of the present invention includes different quantities of valid information symbols is described in Table 3.

**Table 3**

| | | | |
|---|---|---|---|
| DAS5-7 | 8PSK | 116 | 1.9kHz |
| DAS5-7 | 16QAM | 87 | 2.4kHz |
| DAS5-7 | 32QAM | 70 | 2.8kHz |
| DAS5-7 | 64QAM | 58 | 3.2kHz |

A modulation and transmission apparatus provided in an embodiment of the present invention is further introduced. FIG. 6 describes a structure of a modulation and transmission apparatus provided in an embodiment of the present invention, including the following units:
a forming unit 600, configured to form valid information bits and training sequence information into one to-be-transmitted information group;
a modulating unit 601, configured to modulate, by using a first modulation mode, the to-be-transmitted information group formed by the forming unit 600, where the first modulation mode makes the quantity of valid information symbols occupied by the valid information bits in one transmission unit be a first quantity;
a placing wilt 602, configured to place valid information symbols, obtained through modulation by the modulating unit 601, in a symbol position corresponding to the middle of a transmit frequency band, place a third quantity of padding symbols altogether in symbol positions corresponding to two ends of the transmit frequency band, and place the valid information symbols, obtained through modulation by the modulating unit 601, in the remaining symbol positions of the transmit frequency band, where the sum of the third quantity and the first quantity is smaller than or equal to a second quantity, the second quantity is the quantity of valid information symbols that are occupied by the same valid information bits in one transmission unit when a second modulation mode is used, and the second quantity is larger than the first quantity;
an operating unit 603, configured to perform an IDFT operation, a CP addition operation, and a transmit pulse shaping operation on a transmission unit where the placing unit 602 has placed a padding symbols; and
a transmitting unit 604, configured to transmit a transmission unit on which the operating unit 603 has performed transmit pulse shaping, where a valid information bit transmission rate at the time when the transmission unit that has undergone transmit pulse shaping is transmitted is the same as a valid information bit transmission rate at the time when a transmission unit including a second quantity of valid information symbols is transmitted by using the second modulation mode.

As can be known above, in this embodiment, after the first modulation mode is used, padding symbols may be placed in the symbol positions corresponding to the two ends of the transmitting frequency band, thereby adding guard bands at the edges of the pulse-shaped transmit frequency band. In addition, in flat fading channel transmission, use of a high order modulation mode, relative to a low order modulation mode, does not require that a radio environment is significantly improved. Therefore, in a transmission process, in a case that the radio environment is similar, it may be avoided that the power of valid information symbols suffers great attenuation, thereby reducing performance loss at a receiving end and obtaining performance gain on a high coding rate channel.

FIG. 7 describes a structure of a modulation and transmission apparatus provided in another embodiment of the present invention, including the following units:
a forming unit 700, configured to form valid information bits and training sequence information into one to-be-transmitted information group;
a modulating unit 701, configured to modulate, by using a first modulation mode, the to-be-transmitted information group formed by the forming unit 700, where the first modulation mode makes the quantity of valid information symbols occupied by the valid information bits in one transmission unit be a first quantity;
an operating unit 702, configured to perform an IDFT operation, a CP addition operation, and a transmit pulse shaping operation on a transmission unit obtained by the modulating unit 701; and
a transmitting unit, configured to transmit a transmission unit obtained by the operating unit 702, where a valid information bit transmission rate at the time when the transmission unit that has undergone transmit pulse shaping is transmitted is the same as a valid information bit transmission rate at the time when a transmission unit including a second quantity of valid information bits is transmitted by using a second modulation mode, the second quantity is the quantity of valid information symbols that are occupied by the valid information bits in one transmission unit when the second modulation mode is used, and the second quantity is larger than the first quantity.

As can be known above, because the first modulation mode is used in this embodiment, the quantity of valid information symbols occupied by the valid information in the transmission unit is smaller than that in the second modulation mode. That is, the fist quantity is smaller than the second quantity. Meanwhile, the transmission unit with the second quantity of valid information symbols occupies a same bandwidth as the transmission unit with the first quantity of valid information symbols, and therefore, when the quantity of the valid information symbols is the first quantity, a subcarrier corresponding to each valid information symbol occupies a larger bandwidth than each valid information symbol of the second quantity. Therefore, in a scenario with a high frequency deviation, the robustness is enhanced, and a PAPR, of a transmitted signal also drops.

An embodiment of the present invention further provides a communication system, where the communication system includes a modulation and transmission apparatus provided in the embodiment of the present invention and a corresponding receiving and demodulating apparatus.

An embodiment of the present invention further provides a processor, where the communication system includes a modulation and transmission apparatus provided in the embodiment of the present invention.

Persons of ordinary skill in the art can understand that all or part of the procedures of the methods in the embodiments may be implemented by a computer program instructing relevant hardware. The program may be stored in a computer readable storage medium. When the program is run, the procedures of the methods in the embodiments are performed. The storage medium may be a magnetic disk, an optical disk, a read-only memory (Read-Only Memory, ROM), a random access memory (Random Access Memory, RAM) or the like.

Specific examples are used in this document for describing principles and implementation manners of the present invention. The illustration of the foregoing embodiments is merely used to facilitate understanding of the method and ideas of the present invention. Meanwhile, persons of ordinary skill in the art may make modifications to specific implementation manners and application scopes according to the ideas of the present invention. In conclusion, the content of the specification shall not be construed as a limitation to the present invention.

## Claims

1. A modulation and transmission method, comprising:
forming valid information bits and training sequence information into one to-be-transmitted information group;
modulating the to-be-transmitted information group by using a first modulation mode, wherein the first modulation mode makes the quantity of valid information symbols occupied by the valid information bits in one transmission unit be a first quantity;
placing a third quantity of padding symbols altogether in symbol positions corresponding to two ends of a transmit frequency band, and placing the valid information symbols in the remaining symbol positions of the transmit frequency band, wherein the sum of the third quantity and the first quantity is smaller than or equal to a second quantity, the second quantity is the quantity of valid information symbols that are occupied by the valid information bits in one transmission unit when a second modulation mode is used, and the second quantity is larger than the first quantity;
performing an inverse discrete Fourier transform operation, a cyclic prefix addition operation, and a transmit pulse shaping operation on a transmission unit where a padding symbol is placed; and
transmitting a transmission unit that has undergone transmit pulse shaping, wherein a valid information bit transmission rate at the time when the transmission unit that has undergone transmit pulse shaping is transmitted is the same as a valid information bit transmission rate at the time when a transmission unit comprising a second quantity of valid information symbols is transmitted.

2. The modulation and transmission method according to claim 1, wherein the padding symbol is a symbol 0 or a random symbol.

3. The modulation and transmission method according to claim 1, wherein the padding symbol is a repetition of a valid information symbol in a transmission unit.

4. The modulation and transmission method according to claim 1, wherein, if more than two padding symbols are placed at any end of the transmit frequency band, the more than two padding symbols are placed continuously.

5. The modulation and transmission method according to any one of claims 1 to 4, wherein the placing a third quantity of padding symbols altogether in symbol positions corresponding to two ends of the transmit frequency band comprises:
placing same/different quantities of padding symbols in the symbol positions corresponding to the two ends of the transmit frequency band.

6. The modulation and transmission method according to any one of claims 1 to 4, wherein in the cyclic prefix addition operation, the length of an added cyclic prefix is greater than the length of an added cyclic prefix at the time when a second modulation mode is used.

7. The modulation and transmission method according to any one of claims 1 to 4, wherein the step of transmitting a transmission unit that has undergone transmit pulse shaping comprises:
Transmitting, by using only a normal symbol rate, the transmission unit that has undergone the transmit pulse shaping.

8. A modulation and transmission method, comprising:
forming valid information bits and training sequence information into one to-be-transmitted information group;
modulating the to-be-transmitted information group by using a first modulation mode, wherein the first modulation mode makes the quantity of valid information symbols occupied by the valid information bits in one transmission unit be a first quantity;
performing an inverse discrete Fourier transform operation, a cyclic prefix addition operation, and a transmit pulse shaping operation on a modulated transmission unit; and
transmitting a transmission unit that has undergone transmit pulse shaping, wherein a valid information bit transmission rate at the time when the transmission unit that has undergone transmit pulse shaping is transmitted is the same as a valid information bit transmission rate at the time when a transmission unit comprising a second quantity of valid information symbols is transmitted, the second quantity is the quantity of valid information symbols that are occupied by the valid information bits in one transmission unit when a second modulation mode is used, and the second quantity is larger than the first quantity.

9. The modulation and transmission method according to claim 8, wherein in the cyclic prefix addition operation, the length of an added cyclic prefix is greater than the length of an added cyclic prefix when a second modulation mode is used.

10. A modulation and transmission apparatus, comprising:
a forming unit, configured to form valid information bits and training sequence information into one to-be-transmitted information group;
a modulating unit, configured to modulate, by using a first modulation mode, the to-be-transmitted information group formed by the forming unit, wherein the first modulation mode makes the quantity of valid information symbols occupied by the valid information bits in one transmission unit be a first quantity;
a placing unit, configured to place a third quantity of padding symbols altogether in symbol positions corresponding to two ends of a transmit frequency band, and place the valid information symbols in the remaining symbol positions of the transmit frequency band, wherein the sum of the third quantity and the first quantity is smaller than or equal to a second quantity, the second quantity is the quantity of valid information symbols that are occupied by the valid information bits in one transmission unit when a second modulation mode is used, and the second quantity is larger than the first quantity;
an operating unit, configured to perform an inverse discrete Fourier transform operation, a cyclic prefix addition operation, and a transmit pulse shaping operation on a transmission unit where the placing unit has placed a padding symbol; and
a transmitting unit, configured to transmit a transmission unit on which the operating unit has performed transmit pulse shaping, wherein a valid information bit transmission rate at the time when the transmission unit that has undergone transmit pulse shaping is transmitted is the same as a valid information bit transmission rate at the time when a transmission unit comprising a second quantity of valid information symbols is transmitted.

11. A modulation and transmission apparatus, composing:
a forming unit, configured to form valid information bits and training sequence information into one to-be-transmitted information group;
a modulating unit, configured to modulate, by using a first modulation mode, the to-be-transmitted information group formed by the forming unit, wherein the first modulation mode makes the quantity of valid information symbols. occupied by the valid information bits in one transmission unit be a first quantity;
an operating unit, configured to perform an inverse discrete Fourier transform operation, a cyclic prefix addition operation, and a transmit pulse shaping operation on a transmission unit obtained by the modulating unit; and
a transmitting unit, configured to transmit a transmission unit obtained by the operating unit, wherein a valid information bit transmission rate at the time when the transmission unit that has undergone transmit pulse shaping is transmitted is the same as a valid information bit transmission rate at the time when a transmission unit comprising a second quantity of valid information symbols is transmitted, the second quantity is the quantity of valid information symbols that are occupied by the valid information bits in one transmission unit when a second modulation mode is used, and the second quantity is larger than the first quantity.

12. A communication system, comprising a modulation and transmission apparatus according to claim 9 or 10.

13. A processor; comprising a modulation and transmission apparatus according to claim 9 or 10.
